(19) Europäisches Patentamt / European Patent Office / Office européen des brevets

(11) **EP 3 943 822 B1**

(12) **EUROPEAN PATENT SPECIFICATION**

(45) Date of publication and mention
of the grant of the patent:
**27.12.2023   Bulletin 2023/52**

(21) Application number: **21184565.6**

(22) Date of filing: **08.07.2021**

(51) International Patent Classification (IPC):
**F24F 1/06** *(2011.01)*        **F24F 1/46** *(2011.01)*
**F24F 11/36** *(2018.01)*      **F24F 13/10** *(2006.01)*
**F24D 3/18** *(2006.01)*

(52) Cooperative Patent Classification (CPC):
**F24F 11/36; F24D 3/18; F24F 1/06; F24F 1/46;
F24F 13/10;** Y02B 30/12

(54) **HEAT PUMP**

WÄRMEPUMPE

POMPE À CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **20.07.2020   KR 20200089520**

(43) Date of publication of application:
**26.01.2022   Bulletin 2022/04**

(73) Proprietor: **LG Electronics Inc.
Seoul 07336 (KR)**

(72) Inventors:
  • **KIM, Minsoo
    08592 Seoul (KR)**
  • **CHO, Eunjun
    08592 Seoul (KR)**
  • **YOON, Pilhyun
    08592 Seoul (KR)**
  • **RYU, Jihyeong
    08592 Seoul (KR)**
  • **LEE, Youngmin
    08592 Seoul (KR)**
  • **SEO, Hojin
    08592 Seoul (KR)**

(74) Representative: **Vossius & Partner
Patentanwälte Rechtsanwälte mbB
Siebertstraße 3
81675 München (DE)**

(56) References cited:
  **EP-A1- 2 896 897        EP-A1- 3 312 531
  JP-A- 2002 115 939     JP-A- 2016 070 594**

EP 3 943 822 B1

## Description

### Field of the invention

The present invention relates to a heat pump. In particular, the present invention relates to a heat pump capable of discharging a leaked refrigerant to the outside by using an outdoor fan even if a refrigerant leaks from a refrigerant pipe installed in an outdoor unit.

### Description of the Related Art

In general, a heat pump refers to a device that cools and heats a room through the processes of compression, condensation, expansion, and evaporation of a refrigerant. When an outdoor heat exchanger of the heat pump serves as a condenser, whereas an indoor heat exchanger serves as an evaporator, the room can be cooled. On the other hand, when the outdoor heat exchanger of the heat pump serves as an evaporator, whereas the indoor heat exchanger serves as a condenser, the room can be heated.

The refrigerant circulating through such a heat pump may be provided as a flammable refrigerant. In this case, when a flammable refrigerant leaks from the refrigerant pipe, the refrigerant may be ignited by a spark generated in an electric device such as an inverter board, so that a fire or the like may occur.

Accordingly, a lot of researches have been conducted on a structure for discharging the refrigerant leaked from the refrigerant pipe to the outside.

EP 2 896 897 A1 discloses a refrigerating-cycle apparatus with a partition plate by which the ventilating hole partitions off inside the casing so that the machine chamber is formed in lower portion. The refrigerating-cycle circuit is provided with portion that is arranged in machine chamber, and a combustible refrigerant which recirculates. The air blower which is positioned in blowing chamber sends out the external air which is introduced from introduction hole to exterior of casing from blower outlet formed in the blowing chamber through the ventilating hole.

### SUMMARY OF THE INVENTION

The invention is specified by the independent claim 1. Preferred embodiments are defined in the dependent claims.

The present invention has been made in view of the above problems, and provides a heat pump capable of discharging a leaked refrigerant to the outside by using an outdoor fan without having a separate ventilation fan, even if the refrigerant leaks to a cycle part where a compressor, an inverter board, or the like are installed.

The present invention further provides a heat pump capable of discharging a refrigerant that may potentially remain in a cycle part to the outside by operating an outdoor fan for a certain period of time, prior to driving an electric device component of the cycle part, such as an inverter board, that can cause sparks.

The present invention further provides a heat pump capable of reducing power consumption of an outdoor fan by adjusting the position of a damper so that a flow path part where an outdoor heat exchanger is installed and a cycle part do not communicate with each other, when a ventilation operation of discharging the refrigerant leaked to the cycle part to the outside is completed.

In accordance with the present invention, a heat pump comprises the features of claim 1.

According to an aspect not forming part of the present invention, provided is a heat pump comprising: an indoor unit comprising an indoor heat exchanger; an outdoor unit comprising an outdoor heat exchanger and a compressor configured to compress a refrigerant; a housing which forms an outer shape of the outdoor unit and provides an internal space in which the outdoor heat exchanger and the compressor are disposed; a partition wall which is disposed in the internal space of the housing, and divides the internal space into a flow path part space in which the outdoor heat exchanger is disposed and a cycle part space in which the compressor is disposed; an outdoor fan which is disposed in the flow path part space configured to cause an air flow; and a controller configured to control an operation of the compressor and the outdoor fan, wherein the housing has a hole communicating with the cycle part space, and the partition wall has a barrier hole mutually communicating the flow path part space and the cycle part space.

According to an embodiment of the present invention, the housing may further comprise: an inflow hole which provides outdoor air to the outdoor fan; and a discharge hole which discharges the air that passed through the outdoor fan, the inflow hole and the discharge hole may be formed in a portion of the housing that defines a boundary of the flow path part space.

According to an embodiment of the present invention, the partition wall may extend long in a vertical direction.

According to an embodiment of the present invention, the flow path part space and the cycle part space may be disposed in left and right sides with the partition wall interposed therebetween.

According to an embodiment of the present invention, the barrier hole may be provided adjacent to a lower end of the partition wall.

According to an embodiment of the present invention, the hole may be formed in a portion of the housing that defines a boundary of the cycle part space and positioned above the barrier hole.

According to an embodiment of the present invention, the controller may operate the outdoor fan for a certain time, prior to driving the compressor, when a heat pump operation signal is input.

According to the present invention, the heat pump further comprises: a damper which is coupled to one side of the partition so as to be movable in a vertical direction, the damper may be positioned above the barrier hole to open the barrier hole, or covers one side of the barrier hole to close the barrier hole.

According to the present invention, the heat pump further comprises a guide rail which guides the movement of the damper.

According to an embodiment of the present invention, the controller may open the barrier hole by the damper and operates the outdoor fan for a certain time, prior to driving the compressor, when the heat pump operation signal is input.

According to an embodiment of the present invention, the controller may close the barrier hole by the damper, after the outdoor fan is operated for a certain time.

According to an embodiment of the present invention, the heat pump may further comprise a sensor for detecting the refrigerant leaked to the cycle part space.

According to an embodiment of the present invention, the controller may open the barrier hole by the damper while operating the outdoor fan and stops driving of the compressor, when it is determined that the refrigerant leaked to the cycle part space is greater than or equal to a reference amount, based on information obtained from the sensor.

According to an embodiment of the present invention, the certain time may be increased as a total amount of refrigerant circulating the outdoor unit is increased.

According to an embodiment of the present invention, the heat pump may further comprise an inverter board which is installed in the cycle part space to control a frequency of the compressor, the controller may operate the outdoor fan for a certain time, prior to driving the inverter board, when a heat pump operation signal is input.

According to at least one embodiment of the present invention, provided is a heat pump capable of discharging a leaked refrigerant to the outside by using an outdoor fan without having a separate ventilation fan, even if the refrigerant leaks to a cycle part where a compressor, an inverter board, or the like are installed.

According to at least one embodiment of the present invention, provided is a heat pump capable of discharging a refrigerant that may potentially remain in a cycle part to the outside by operating an outdoor fan for a certain period of time, prior to driving an electric device component of the cycle part, such as an inverter board, that can cause sparks.

According to at least one embodiment of the present invention, provided is a heat pump capable of reducing power consumption of an outdoor fan by adjusting the position of a damper so that a flow path part where an outdoor heat exchanger is installed and a cycle part do not communicate with each other, when a ventilation operation of discharging the refrigerant leaked to the cycle part to the outside is completed.

## BRIEF DESCRIPTION OF THE DRAWINGS

The above and other objects, features and advantages of the present invention will be more apparent from the following detailed description in conjunction with the accompanying drawings, in which:

FIG. 1 is a diagram illustrating a configuration of a heat pump capable of switching between a heating operation and a cooling operation and a flow of a refrigerant according to an embodiment of the present invention;
FIG. 2 is a diagram illustrating an internal configuration of an outdoor unit according to an embodiment of the present invention, and is a diagram illustrating a flow path part and a cycle part disposed in the left and right sides across a partition wall in which a barrier hole is formed;
FIG. 3 is a diagram for explaining a damper installed in a partition wall to open or close a barrier hole according to another embodiment of the present invention;
FIG. 4 is a diagram illustrating a control procedure of a heat pump according to an embodiment of the present invention;
FIG. 5 is a diagram illustrating a control produce of a heat pump according to another embodiment of the present invention; and
FIGS. 6 and 7 are diagrams for explaining a change in a leakage refrigerant concentration according to ventilation time.

## DETAILED DESCRIPTION OF THE PREFERRED EMBODIMENTS

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated. In general, suffixes such as "module" and "unit" may be used to refer to elements or components. Use of such suffixes herein is merely intended to facilitate description of the specification, and the suffixes do not have any special meaning or function. In the present invention, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present invention should be construed to extend to any alterations, equivalents and substitutes in addition to those which are particularly set out in the accompanying drawings. It will be understood that although the terms first, second, etc. may be used herein to describe various elements, these elements should not be limited by these terms. These terms are only used to distinguish one element from another. It will be understood that when an element is referred to as being "connected with" another element, there may be intervening elements present. In contrast, it will be understood that when an element is referred to as being "directly connected with" another element, there are no intervening elements present. A singular representation may include a plural representation unless context clearly indicates otherwise. Terms such as "includes" or "has" used herein should be considered as indicating the presence of several components, functions or steps, disclosed in the specification, and it is also understood that more or fewer components, functions, or steps may likewise be utilized.

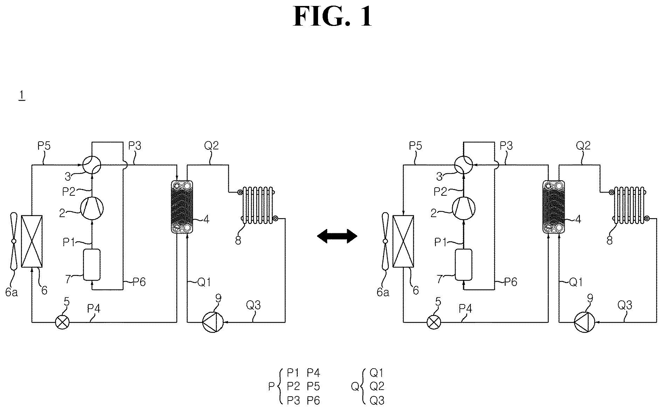

Referring to FIG. 1, a heat pump 1 may include a compressor 2, a switching valve 3, a heat exchanger 4, an outdoor heat exchanger 6, an expansion valve 5, and an accumulator 7.

The compressor 2 may compress the refrigerant flowed from the accumulator 7 and discharge a high-temperature and high-pressure refrigerant. In this case, the accumulator 7 may provide a vapor refrigerant to the compressor 2 through a first pipe P1. Meanwhile, a second pipe P2 may be installed between the compressor 2 and the switching valve 3 to provide a flow path of refrigerant ranging from the compressor 2 to the switching valve 3.

The switching valve 3 may receive the refrigerant which is discharged from the compressor 2 and passed through the second pipe P2. In addition, the switching valve 3 may selectively guide the refrigerant flowed through the second pipe P2 to the heat exchanger 4 or the outdoor heat exchanger 6, by switching the flow path according to the operation mode of the heat pump. For example, the switching valve 3 may be a four-way valve. Meanwhile, a sixth pipe P6 may be installed between the switching valve 3 and the accumulator 7 to provide a flow path of refrigerant ranging from the switching valve 3 to the accumulator 7.

For example, when the heat pump 1 performs a heating operation, the switching valve 3 may guide the refrigerant flowed through the second pipe P2 to the heat exchanger 4. In this case, the heat exchanger 4 may serve as a condenser, and the outdoor heat exchanger 6 may serve as an evaporator. For another example, when the heat pump 1 performs a cooling operation, the switching valve 3 may guide the refrigerant flowed through the second pipe P2 to the outdoor heat exchanger 6. In this case, the outdoor heat exchanger 6 may serve as a condenser, and the heat exchanger 4 may serve as an evaporator.

The outdoor heat exchanger 6 may exchange heat between a refrigerant and a heat transfer medium. The heat transfer direction between the refrigerant and the heat transfer medium in the outdoor heat exchanger 6 may differ depending on the operation mode of the heat pump 1, that is, depending on whether it is a heating operation or a cooling operation.

For example, the heat transfer medium is outdoor air, and heat exchange may be performed between the refrigerant and outdoor air in the outdoor heat exchanger 6. In this case, an outdoor fan 6a is disposed in one side of the outdoor heat exchanger 6 to control the amount of air provided to the outdoor heat exchanger 6. Meanwhile, a fifth pipe P5 may be installed between the switching valve 3 and the outdoor heat exchanger 6 to provide a flow path for refrigerant connecting the switching valve 3 and the outdoor heat exchanger 6.

The heat exchanger 4 may exchange heat between the refrigerant and the heat transfer medium. The heat transfer direction between the refrigerant and the heat transfer medium in the heat exchanger 4 may differ depending on the operation mode of the heat pump 1, that is, depending on whether it is a heating operation or a cooling operation. Meanwhile, the third pipe P3 may be installed between the switching valve 3 and the heat exchanger 4 to provide a flow path for refrigerant connecting the switching valve 3 and the heat exchanger 4.

For example, the heat transfer medium is indoor air, and heat exchange may be performed between the refrigerant and the indoor air in the heat exchanger 4. In this case, an indoor fan (not shown) is disposed in one side of the heat exchanger 4 to control the amount of air provided to the heat exchanger 4.

For another example, the heat transfer medium is water, and heat exchange may be performed between the refrigerant and water in the heat exchanger 4. In this case, the water that passed through the heat exchanger 4 may be used to be supplied to a radiator 8 installed indoors or a pipe installed in the floor to cool or heat an indoor space, or used to supply hot or cold water to a room by heating or cooling the water stored in a hot water tank. At this time, the heat pump 1 may be referred to as an air-to-water heat pump (AWHP). Meanwhile, the radiator 8 may be referred to as an indoor heat exchanger.

In this case, the heat pump 1 may include a pump 9 and a radiator 8. When the pump 9 is driven, water may circulate through a water pipe Q. The radiator 8 may be installed indoors, and receive water that is heated or cooled while flowing through the heat exchanger 4. For example, the heated water may pass through the radiator 8 and may radiate heat to the surroundings, thereby heating the indoor space. For example, the cooled water may pass through the radiator 8 and may absorb heat from the surroundings, thereby cooling the indoor space. Meanwhile, the heat pump 1 may replace the radiator 8 with an indoor heat transfer unit or, along with it, may have a water pipe or a fan coil unit (FCU) installed in the indoor floor.

Meanwhile, a first water pipe Q1 may be installed between the pump 9 and the heat exchanger 4 to provide a water flow path connecting the pump 9 and the heat exchanger 4. In addition, a second water pipe Q2 may be installed between the heat exchanger 4 and the radiator 8 to provide a water flow path connecting the heat exchanger 4 and the radiator 8. In addition, a third water pipe Q3 may be installed between the radiator 8 and the pump 9 to provide a water flow path connecting the radiator 8 and the pump 9.

The expansion valve 5 may be installed in a fourth pipe P4 to expand the refrigerant flowing through the flow path of the fourth pipe P4. Here, the fourth pipe P4 may be installed between the heat exchanger 4 and the outdoor heat exchanger 6 to provide a flow path for refrigerant connecting the heat exchanger 4 and the outdoor heat exchanger 6. For example, the expansion valve 5 may be an electronic expansion valve (EEV).

A controller C (not shown) may control the operation of the heat pump 1. The controller C may be electrically connected to each component of the heat pump 1. The controller C may adjust the operation of each component of the heat pump 1 according to the operation mode of the heat pump 1.

Hereinafter, the heat pump 1 is described as an example of AWHP, but the heat pump 1 applicable to the present disclosure is not limited thereto.

<Heating operation mode of heat pump>

Referring to the left drawing of FIG. 1, a case in which the heat pump 1 performs a heating operation will be described as follows.

When a heating operation signal is received by the heat pump 1, the controller C adjusts the flow path of the switching valve 3 so that the refrigerant discharged from the compressor 2 is guided to the heat exchanger 4, and can control the opening degree of the flow path of the fourth pipe P4 by the expansion valve 5. Next, the controller C may drive the compressor 2 to circulate the refrigerant in the refrigerant pipe P, and drive the pump 9 to circulate water in the water pipe Q.

For example, the heating operation signal may be a signal arbitrarily input by a user. For another example, the heating operation signal may be a signal provided to the controller C by a thermostat provided in the indoor space, when the indoor temperature detected by an indoor temperature sensor is lower than a desired temperature set by the user by a certain level or more.

Specifically, the low-temperature and low-pressure refrigerant flowing from the accumulator 7 to the compressor 2 through the first pipe P1 may be compressed in the compressor 2 and discharged in a high-temperature and high-pressure state. The refrigerant discharged from the compressor 2 may be flowed into the heat exchanger 4 through the second pipe P2, the switching valve 3, and the third pipe P3 sequentially.

As heat energy is transferred from the refrigerant to water in the heat exchanger 4, the refrigerant may be condensed. At this time, the heat exchanger 4 may serve as a condenser. In addition, according to the heat exchange between the refrigerant and water, the temperature of the water flowing into the heat exchanger 4 from the pump 9 through the first water pipe Q1 may increase. Water which is heated while passing through the heat exchanger 4 may flow into the radiator 8 through the second water pipe Q2 to heat the indoor space. The water whose temperature has decreased while passing through the radiator 8 may be returned to the pump 9 through the third water pipe Q3.

For example, the heat exchanger 4 may be a plate heat exchanger including a plurality of heat transfer plates stacked on each other. In this case, the refrigerant and water may exchange heat with each other in a non-contact manner of flowing through a flow path formed between a plurality of heat transfer plates. For another example, the heat exchanger 4 may be a water tank in which a port through which water is introduced or discharged is formed. In this case, a pipe through which the refrigerant flows is provided in a form of coil along the outer circumferential surface of the water tank, so that the refrigerant and water can exchange heat with each other in a non-contact manner.

Meanwhile, the refrigerant condensed while passing through the heat exchanger 4 may pass through the expansion valve 5 in the fourth pipe P4 and may be expanded in a low temperature and low pressure state. At this time, the expansion valve 5 may control the suction superheat degree by adjusting the opening degree of the flow path of the fourth pipe P4. Here, the suction superheat degree may be defined as a difference between the temperature of the refrigerant sucked into the compressor 2 and the saturation temperature of the refrigerant evaporated in the outdoor heat exchanger 6. In addition, the refrigerant passed through the expansion valve 5 may flow into the outdoor heat exchanger 6.

As the heat energy of outdoor air is transferred from the outdoor heat exchanger 6 to the refrigerant, the refrigerant may be evaporated. At this time, the outdoor heat exchanger 6 may serve as an evaporator. The refrigerant which is evaporated while passing through the outdoor heat exchanger 6 may flow into the accumulator 7 through the fifth pipe P5, the switching valve 3, and the sixth pipe P6 sequentially so that a cycle for the above-described heating operation of heat pump can be completed.

<Cooling operation mode of heat pump>

Referring to the right drawing of FIG. 1, a case in which the heat pump 1 performs a cooling operation will be described as follows.

When a cooling operation signal is received by the heat pump 1, the controller C may adjust the flow path of the switching valve 3 so that the refrigerant discharged from the compressor 2 is guided to the outdoor heat exchanger 6, and may control the opening degree of the flow path of the fourth pipe P4 by the expansion valve 5. Next, the controller C may drive the compressor 2 to circulate the refrigerant in the refrigerant pipe P, and drive the pump 9 to circulate water in the water pipe Q.

For example, the cooling operation signal may be a signal arbitrarily input by a user. For another example, the cooling operation signal may be a signal provided to the controller C by the thermostat provided in the indoor space, when the indoor temperature detected by the indoor temperature sensor is higher than a desired temperature set by the user by a certain level or more.

Specifically, the low-temperature and low-pressure refrigerant flowing from the accumulator 7 to the compressor 2 through the first pipe P1 may be compressed in the compressor 2 and discharged in a high-temperature and high-pressure state. The refrigerant discharged from the compressor 2 may be flowed into the outdoor heat exchanger 6 through the second pipe P2, the switching valve 3, and the fifth pipe P5 sequentially.

As heat energy is transferred from the refrigerant to the outdoor air in the outdoor heat exchanger 6, the refrigerant may be condensed. At this time, the outdoor heat exchanger 6 may serve as a condenser. The refrigerant which is condensed while passing through the outdoor heat exchanger 6 may pass through the expansion valve 5 in the fourth pipe P4 and may be expanded in a low-temperature and low-pressure state. At this time, the expansion valve 5 may control the suction superheat degree by adjusting the opening degree of the flow path of the fourth pipe P4. Here, the suction superheat degree may be defined as a difference between the temperature of the refrigerant sucked into the compressor 2 and the saturation temperature of the refrigerant evaporated in the heat exchanger 4. In addition, the refrigerant passed through the expansion valve 5 may flow into the heat exchanger 4.

As the heat energy of water is transferred from the heat exchanger 4 to the refrigerant, the refrigerant may be evaporated. At this time, the heat exchanger 4 may serve as an evaporator. In addition, according to the heat exchange between the refrigerant and water, the temperature of the water flowing from the pump 9 to the heat exchanger 4 through the first water pipe Q1 may decrease. Water which is cooled while passing through the heat exchanger 4 may flow into the radiator 8 through the second water pipe Q2 to cool the indoor space. Water which passed through the radiator 8 and has an increased temperature may be returned to the pump 9 through the third water pipe Q3.

For example, the heat exchanger 4 may be a plate heat exchanger including a plurality of heat transfer plates stacked on each other. In this case, the refrigerant and water may exchange heat with each other in a non-contact manner of flowing through a flow path formed between a plurality of heat transfer plates. For another example, the heat exchanger 4 may be a water tank in which a port through which water is introduced or discharged is formed. In this case, a pipe through which the refrigerant flows is provided in a form of coil along the outer circumferential surface of the water tank, so that the refrigerant and water can exchange heat with each other in a non-contact manner.

Meanwhile, the refrigerant which is evaporated while passing through the heat exchanger 4 may flow into the accumulator 7 through the third pipe P3, the switching valve 3, and the sixth pipe P6 sequentially, so that a cycle for the above-described cooling operation of heat pump can be completed.

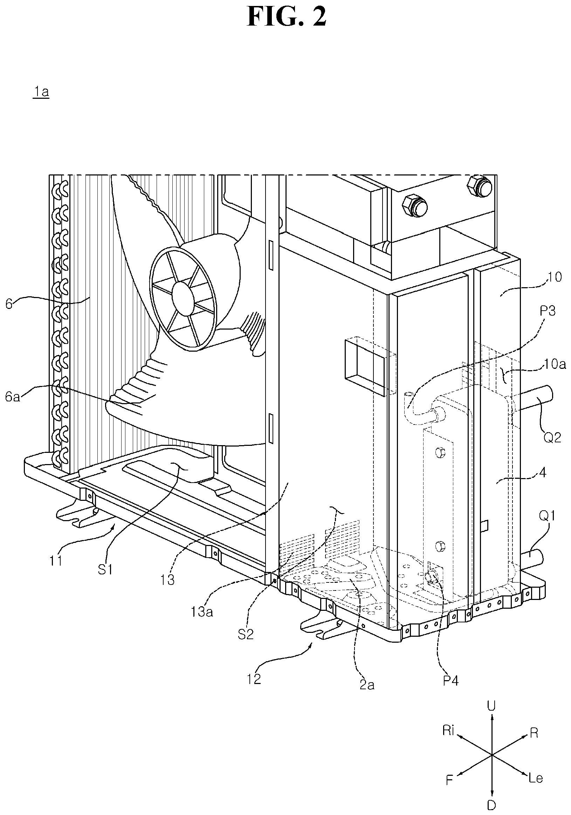

Referring to FIGS. 1 and 2, the heat pump 1 includes an outdoor unit 1a and an indoor unit.

The outdoor unit 1a may include the accumulator 7, the compressor 2, the switching valve 3, the heat exchanger 4, the expansion valve 5, the outdoor heat exchanger 6, and the outdoor fan 6a described above. The indoor unit may include the above described radiator 8. At this time, the radiator 8 may be referred to as an indoor heat exchanger. Meanwhile, the pump 9 may be provided in the indoor unit or in the outdoor unit 1a, or may be separately provided between the indoor unit and the outdoor unit 1a.

In addition, the outdoor unit 1a includes a housing 10 and a partition wall 13. The housing 10 may form an outer shape of the outdoor unit 1a. The housing 10 may provide an internal accommodation space in which the above-described accumulator 7, compressor 2, switching valve 3, heat exchanger 4, expansion valve 5, outdoor heat exchanger 6, and outdoor fan 6a are installed. The partition wall 13 extends long in the vertical direction UD, and may be formed in a plate shape as a whole. The partition wall 13 may be installed in the internal accommodation space of the housing 10 to divide the internal accommodation space of the housing 10 into a flow path part space S1 and a cycle part space S2. Meanwhile, the partition wall 13 may be referred to as a barrier.

For example, the flow path part 11 of the outdoor unit 1a may be located in the right direction Ri of the partition wall 13 and may include a flow path part space S1. For example, the cycle part 12 of the outdoor unit 1a may be located in the left direction Le of the partition wall 13 and may include a cycle part space S2. Meanwhile, the cycle part 12 may be referred to as a machine room or a machine unit.

The flow path part 11 may be provided with the outdoor heat exchanger 6 and the outdoor fan 6a. In this case, an inflow hole (not shown) through which outdoor air flows into and a discharge hole (not shown) through which outdoor air is discharged may be formed in the housing 10 surrounding the outside of the flow path part 11. Accordingly, when the outdoor fan 6a is driven, the outdoor air flowed into through the inflow hole may perform heat exchange with the outdoor heat exchanger 6, and then may be discharged to the outside through the discharge hole. That is, the inflow hole may provide outdoor air to the outdoor fan 6a, and the discharge hole may discharge the air that passed through the outdoor fan 6a to the outside. In this case, the inflow hole and the discharge hole may be formed in a part of the housing 10 forming a boundary of the flow path part space S1. For example, the outdoor heat exchanger 6 may be installed in the right inner surface and the rear inner surface of the flow path part 11. For example, the outdoor fan 6a may be installed in the center of the flow path part 11.

The cycle part 12 may be provided with the accumulator 7, the compressor 2, the switching valve 3, the heat exchanger 4, and the expansion valve 5. For example, the accumulator 7, the compressor 2, and the heat exchanger 4 may be fixed in a mount 2a provided below the cycle part 12. In addition, an inverter board (not shown) that controls the frequency of the compressor 2, or the like may also be fixed in the mount 2a.

For example, the heat exchanger 4 may be a water-refrigerant heat exchanger, and may be a plate heat exchanger including a plurality of heat transfer plates stacked on each other. In this case, the first water pipe Q1 and the second water pipe Q2 may be connected to the heat exchanger 4 in the rear side of the heat exchanger 4, and the third pipe P3 and the fourth pipe P4 may be connected to the heat exchanger 4 in the front side of the heat exchanger 4.

Meanwhile, a barrier hole 13a may be formed in one side of the partition wall 13. The barrier hole 13a may be formed by penetrating the partition wall 13 in the left-right direction LR. In this case, the flow path part space S1 and the cycle part space S2 may communicate with each other through the barrier hole 13a. In addition, a hole 10a through which air is introduced may be formed in the housing 10 surrounding the outer side of the cycle part 12. The hole 10a may be formed in a part of the housing 10 forming the boundary of the cycle part space S2. For example, the hole 10a is provided in the rear side surface of the housing 10, and the above-described second water pipe Q2 may pass through the hole 10a.

In this case, when the outdoor fan 6a is driven, outdoor air introduced through the hole 10a may flow into the flow path 11 through the barrier hole 13a, and may be discharged to the outside through the discharge hole. Thus, even if the refrigerant leaks from the refrigerant pipe P installed in the cycle part 12, the leaked refrigerant may be discharged to the outside together with outdoor air by the flow of air, which flows from the hole 10a to the discharge hole through the barrier hole 13a, that is generated by the outdoor fan 6a. Accordingly, it is possible to prevent a risk such as a fire due to ignition of the flammable refrigerant leaked from the refrigerant pipe P installed in the cycle part 12.

For example, the refrigerant flowing through the refrigerant pipe P is a flammable refrigerant and may have a density greater than that of air. In this case, the barrier hole 13a may be provided adjacent to the lower end of the partition wall 13. For example, the barrier hole 13a may include a plurality of barrier holes 13a spaced apart from each other in the front-rear direction FR and the vertical direction UD. Further, considering that the density of air is less than that of the flammable refrigerant, the hole 10a may be located above the barrier hole 13a. For example, the barrier hole 13a may be provided adjacent to the upper end of the rear surface of the housing 10.

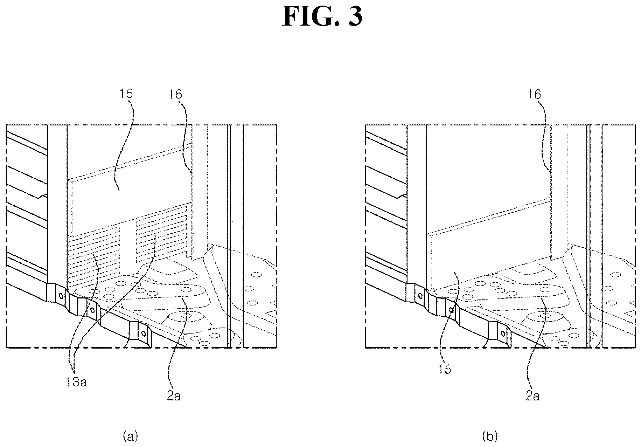

Referring to FIG. 3, the outdoor unit 1a (see FIG. 2) may include a damper 15 and a guide rail 16.

The damper 15 may be installed in one side of the partition wall 13. For example, the damper 15 may be installed in the left side surface of the partition wall 13 to be movable in the vertical direction UD.

Referring to FIG. 3A, the damper 15 may be located above the barrier hole 13a. In this case, the flow path part space S1 and the cycle part space S2 may communicate with each other through the barrier hole 13a.

Referring to FIG. 3B, the damper 15 may be moved from the upper side to the lower side of the barrier hole 13a to cover the left side of the barrier hole 13a. In this case, the flow path part space S1 and the cycle part space S2 may not communicate with each other.

The guide rail 16 is installed in one side of the partition wall 13, and may be coupled for the damper 15 to be movable. For example, the guide rail 16 may be installed in the left side surface of the partition wall 13 to guide the movement of the damper 15 in the vertical direction UD.

Meanwhile, a motor (not shown) is electrically connected to the controller C, and may be operated according to a control signal from the controller C. The motor provides power to the damper 15 to move the damper 15 on the guide rail 16 in the vertical direction UD. In this case, the motor may be installed in the cycle part 12.

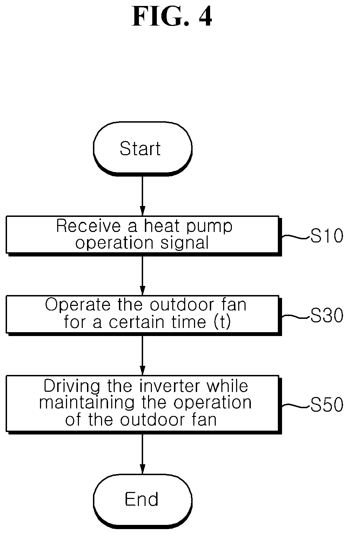

Referring to FIGS. 2 and 4, when an operation signal is received by the heat pump (S10), the controller C may operate the outdoor fan 6a for a certain time t (S30). Here, the operation signal may be a heating operation signal or cooling operation signal of the above-described heat pump. In this case, even if there is a refrigerant which is leaked from the refrigerant pipe P installed in the cycle part 12 and remains in the cycle part 12, remaining refrigerant may be discharged to the outside together with outdoor air by the flow of air, which flows from the hole 10a to the discharge hole through the barrier hole 13a, that is generated by the outdoor fan 6a at step S30.

After step S30, the controller C may control the operation of the compressor 2 by driving the inverter board while maintaining the operation of the outdoor fan 6a (S50). In this case, prior to driving an electric device component of the cycle part 12, such as an inverter board, that can cause sparks, the refrigerant, which is leaked to the cycle part 12 at step 30 and may potentially remain, is discharged to the outside, thereby preventing a safety risk such as fire due to ignition of the flammable refrigerant caused by sparks of the inverter board.

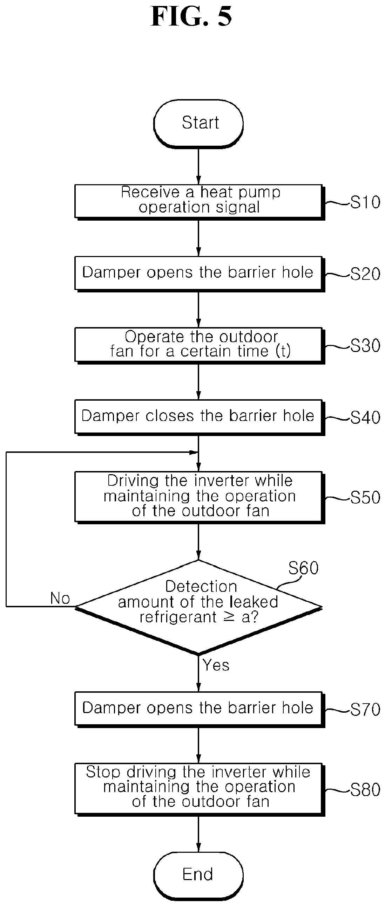

Referring to FIGS. 3 and 5, when an operation signal is received by the heat pump (S10), the controller C may control the position of the damper 15 so that the damper 15 opens the barrier hole 13a (S20). Here, the operation signal may be a heating operation signal or cooling operation signal of the above-described heat pump. In addition, the fact that the damper 15 opens the barrier hole 13a means that the damper 15 is located above the barrier hole 13a such that the flow path part space S1 and the cycle part space S2 communicate with each other through the barrier hole 13a (see FIG. 3A).

After step S20, the controller C may operate the outdoor fan 6a for a certain time t (S30). In this case, even if there is a refrigerant which is leaked from the refrigerant pipe P installed in the cycle part 12 and remains in the cycle part 12, remaining refrigerant may be discharged to the outside together with outdoor air by the flow of air, which flows from the hole 10a to the discharge hole through the barrier hole 13a, that is generated by the outdoor fan 6a at step S30.

After step S30, the controller C may control the position of the damper 15 so that the damper 15 closes the barrier hole 13a (S40). Here, the fact that the damper 15 closes the barrier hole 13a means that the damper 15 is moved from the upper side of the barrier hole 13a toward the lower side to cover one side of the barrier hole 13a, so that the flow path part space S1 and the cycle part space S2 do not communicate with each other (see FIG. 3B).

After step S40, the controller C may control the operation of the compressor 2 by driving the inverter board while maintaining the operation of the outdoor fan 6a (S50). In this case, prior to driving an electric device component of the cycle part 12, such as an inverter board, that can cause sparks, the refrigerant, which is leaked to the cycle part 12 at step 30 and may potentially remain, is discharged to the outside, thereby preventing a safety risk such as fire due to ignition of the flammable refrigerant caused by sparks of the inverter board. In addition, as the damper 15 closes the barrier hole 13a at step S40, the flow of air generated by the outdoor fan 6a at step S50 may be formed only between the inflow hole and the discharge hole that are required for heat exchange between the refrigerant and outdoor air in the outdoor heat exchanger 6. Accordingly, the case where step S40 is performed prior to step S50 may be advantageous in reducing power consumption of the outdoor fan in comparison with the case where step S40 is not performed prior to step S50.

After step S50, the controller C may determine whether the detection amount of the refrigerant leaked to the cycle part 12 is equal to or greater than a reference value a (S60). To this end, the outdoor unit 1a may be provided with a sensor (not shown) that is provided in the cycle part 12 to detect the refrigerant leaked to the cycle part 12. For example, the sensor may be a gas detection sensor.

If it is determined that the detection amount of the refrigerant leaked to the cycle part 12 is greater than or equal to the reference value a at step S60, the controller C may control the position of the damper 15 so that the damper 15 opens the barrier hole 13a (S70). Further, the controller C may stop driving the inverter board while maintaining the operation of the outdoor fan 6a (S80). Here, step S70 and step S80 may be performed simultaneously, or one may precede the other.

Accordingly, when it is detected that the refrigerant has leaked to the cycle part 12 more than the reference value a during the operation of the heat pump, the leaked refrigerant is discharged to the outside by the flow of air, which flows from the hole 10a to the discharge hole through the barrier hole 13a, that is generated by the outdoor fan 6a, and the drive of the inverter is stopped, thereby preventing a risk such as fire due to ignition of the leaked refrigerant.

Meanwhile, if it is determined that the detection amount of the refrigerant leaked to the cycle part 12 at step S60 is less than the reference value a, it may be returned to step S50.

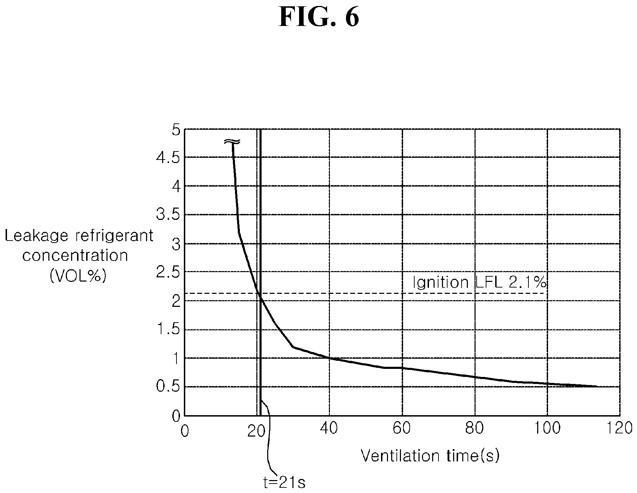

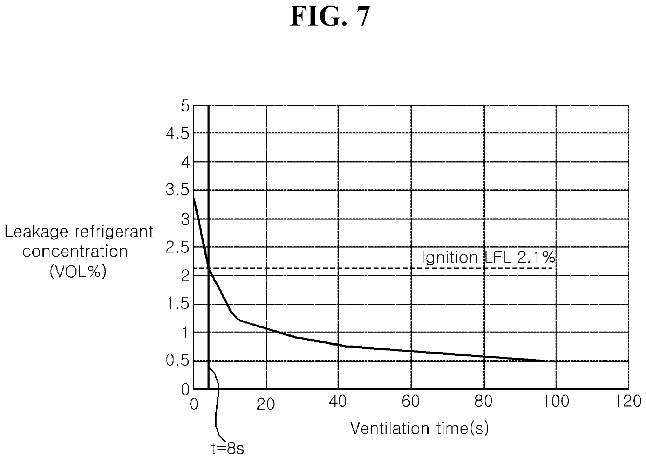

Referring to FIGS. 6 and 7, the time t during which the outdoor fan 6a operates at S30 (see FIGS. 4 and 5) may be calculated from a lower flammable limit (LFL) of the refrigerant, a molecular weight M of the refrigerant, a total amount of refrigerant (mR) circulating in the refrigerant pipe P, a ventilation air volume Vdot, and a volume V of the cycle part 12. Here, the ventilation air volume may be defined as an amount of air, generated by the outdoor fan 6a, flowing from the hole 10a to the discharge hole through the barrier hole 13a.

Specifically, the time t during which the outdoor fan 6a operates may be calculated based on Equation 1 below.

【Equation 1】

$$t > \frac{-\ln(LFL)}{M(1.18V - 0.65mR) + Vdot}$$

Referring to FIG. 6, for example, when the refrigerant circulating in the refrigerant pipe P is R290 and the total amount of refrigerant mR is 840g, the change in a leakage refrigerant concentration VOL% according to a ventilation time s can be checked. Here, the ventilation time s may mean a time during which the outdoor fan 6a is operated to discharge the refrigerant leaked to the cycle part 12 to the outside. In addition, the leakage refrigerant concentration VOL% may be a value obtained by dividing the volume of the refrigerant leaked to the cycle part 12 by the air volume of the cycle part 12. Here, the volume of the refrigerant leaked to the cycle part 12 may be calculated based on information obtained from the sensor that detects the refrigerant leaked to the cycle part 12.

As the ventilation time s increases, it can be seen that the leakage refrigerant concentration VOL% decreases. In addition, the R290 refrigerant may be ignited when the leakage refrigerant concentration VOL% is 2.1% or more. In other words, the ignition LFL of the R290 refrigerant may be 2.1%. In this case, in order to prevent a risk such as fire due to the ignition of the leaked refrigerant, the ventilation time s is preferably 21 seconds or more so that the leaked refrigerant concentration VOL% becomes less than or equal to the ignition LFL of the R290 refrigerant. That is, it is preferable that the time t during which the outdoor fan 6a is operated at step S30 is 21 seconds or more.

As another example with reference to FIG. 7, when the refrigerant circulating in the refrigerant pipe P is R290 and the total amount of refrigerant mR is 670g, the change in the leakage refrigerant concentration VOL% according to the ventilation time s can be checked. Here, the ventilation time s may mean a time during which the outdoor fan 6a is operated to discharge the refrigerant leaked to the cycle part 12 to the outside. In addition, the leakage refrigerant concentration VOL% may be a value obtained by dividing the volume of the refrigerant leaked to the cycle part 12 by the air volume of the cycle part 12. Here, the volume of the refrigerant leaked to the cycle part 12 may be calculated based on information obtained from the sensor that detects the refrigerant leaked to the cycle part 12.

As the ventilation time s increases, it can be seen that the leakage refrigerant concentration VOL% decreases. In addition, the R290 refrigerant may be ignited when the leakage refrigerant concentration VOL% is 2.1% or more. In other words, the ignition LFL of the R290 refrigerant may be 2.1%. In this case, in order to prevent a risk such as fire due to the ignition of the leaked refrigerant, the ventilation time s is preferably 8 seconds or more so that the leaked refrigerant concentration VOL% is less than or equal to the ignition LFL of the R290 refrigerant. That is, it is preferable that the time t during which the outdoor fan 6a is operated at step S30 described above is 8 seconds or more.

Accordingly, as the total amount of refrigerant circulating through the refrigerant pipe P increases, it is preferable that the time t during which the outdoor fan 6a is operated at step S30 described above increases.

## Claims

1. A heat pump (1) comprising:

   an indoor unit comprising an indoor heat exchanger (8);
   an outdoor unit (1a) comprising an outdoor heat exchanger (6) and a compressor (2) configured to compress a refrigerant;
   a housing (10) which forms an outer shape of the outdoor unit (1a) and provides an internal space in which the outdoor heat exchanger (6) and the compressor (2) are disposed;
   a partition wall (13) which is disposed in the internal space of the housing (10), and divides the internal space into a flow path part space (51) in which the outdoor heat exchanger (6) is disposed and a cycle part space (S2) in which the compressor (2) is disposed;

   an outdoor fan (6a) which is disposed in the flow path part space (S1) configured to generate an air flow; and
   a controller (C) configured to control an operation of the compressor (2) and the outdoor fan (6a),
   wherein the housing (10) has a hole (10a) communicating with the cycle part space (S2), and the partition wall (13) has a barrier hole (13a) mutually communicating the flow path part space (51) and the cycle part space (S2),
   **characterized in that** the heat pump (1) further comprises:

   a damper (15) which is coupled to one side of the partition wall (13) so as to be movable in a vertical direction,
   wherein the damper (15) is positioned above the barrier hole (13a) to open the barrier hole (13a), or covers one side of the barrier hole (13a) to close the barrier hole (13a),
   a guide rail (16) configured to guide the movement of the damper (15), and
   a motor electrically connected to the controller (C) and configured to provide power to the damper (15) to move the damper (15) on the guide rail (16) in the vertical direction.

2. The heat pump (1) of claim 1, wherein the housing (10) further comprises:

   an inflow hole which provides outdoor air to the outdoor fan (6a); and
   a discharge hole which discharges the air that passed through the outdoor fan (6a),
   wherein the inflow hole and the discharge hole are formed in a portion of the housing (10) that defines a boundary of the flow path part space (51).

3. The heat pump (1) of claim 1 or 2, wherein the partition wall (13) extends long in a vertical direction.

4. The heat pump (1) of any one of claims 1 to 3, wherein the flow path part space (51) and the cycle part space (S2) are disposed in left and right sides with the partition wall (13) interposed therebetween.

5. The heat pump (1) of any one of claims 1 to 4, wherein the barrier hole (13a) is provided adjacent to a lower end of the partition wall (13).

6. The heat pump (1) of any one of claims 1 to 5, wherein the hole (10a) is formed in a portion of the housing (10) that defines a boundary of the cycle part space (51) and positioned above the barrier hole (13a).

7. The heat pump (1) of any one of claims 1 to 6, wherein the controller (C) is configured to operate the outdoor fan (6a) for a certain time, prior to driving the compressor (2), when a heat pump operation signal is input.

8. The heat pump (1) of claims 1 to 7, wherein the controller is configured to open the barrier hole (13a) by the damper (15) and to operate the outdoor fan (6a) for a certain time, prior to driving the compressor (2), when the heat pump operation signal is input.

9. The heat pump (1) of claim 8, wherein the controller is configured to close the barrier hole (13a) by the damper, after the outdoor fan (6a) is operated for a certain time.

10. The heat pump (1) of claim 9, further comprising a sensor for detecting the refrigerant leaked to the cycle part space (S2).

11. The heat pump (1) of claim 10, wherein the controller (C) is configured to open the barrier hole (13a) by the damper (15) while operating the outdoor fan (6a) and to stop driving of the compressor (2), when it is determined that the refrigerant leaked to the cycle part space (S2) is greater than or equal to a reference amount, based on information obtained from the sensor.

12. The heat pump (1) of any one of claims 8 to 13, wherein the certain time is increased as a total amount of refrigerant circulating the outdoor unit (1a).

13. The heat pump (1) of any one of claims 1 to 12, further comprising an inverter board which is installed in the cycle part space (S2) configured to control a frequency of the compressor (2), wherein the controller is configured to operate the outdoor fan (6a) for a certain time, prior to driving the inverter board, when a heat pump operation signal is input.

**Patentansprüche**

1. Wärmepumpe (1), die aufweist:

eine Inneneinheit, die einen Innenwärmetauscher (8) aufweist;
eine Außeneinheit (1a), die einen Außenwärmetauscher (6) und einen Verdichter (2) aufweist, der konfiguriert ist, ein Kältemittel zu verdichten;
ein Gehäuse (10), das eine Außenform der Außeneinheit (1a) bildet und einen Innenraum bereitstellt, in dem der Außenwärmetauscher (6) und der Verdichter (2) angeordnet sind; eine Trennwand (13), die im Innenraum des Gehäuses (10) angeordnet ist und den Innenraum in einen Strömungsweg-Teilraum (S1), in dem der Außenwärmetauscher (6) angeordnet ist, und einen Kreislauf-Teilraum (S2) unterteilt, in dem der Verdichter (2) angeordnet ist,
einen Außenventilator (6a), der im Strömungsweg-Teilraum (S1) angeordnet ist und konfiguriert ist, einen Luftstrom zu erzeugen; und
eine Steuerung (C), die konfiguriert ist, einen Betrieb des Verdichters (2) und des Außenventilators (6a) zu steuern,
wobei das Gehäuse (10) eine Öffnung (10a) aufweist, die mit dem Kreislauf-Teilraum (S2) in Verbindung steht, und
die Trennwand (13) ein Sperrloch (13a) aufweist, das den Strömungsweg-Teilraum (S1) und den Kreislauf-Teilraum (S2) miteinander verbindet,
**dadurch gekennzeichnet, dass** die Wärmepumpe (1) ferner aufweist:

eine Klappe (15), die mit einer Seite der Trennwand (13) gekoppelt ist, so dass sie in vertikaler Richtung beweglich ist,
wobei die Klappe (15) über dem Sperrloch (13a) positioniert ist, um das Sperrloch (13a) zu öffnen, oder eine Seite des Sperrlochs (13a) abdeckt, um das Sperrloch (13a) zu schließen,
eine Führungsschiene (16), die konfiguriert ist, die Bewegung der Klappe (15) zu führen, und
einen Motor, der elektrisch mit der Steuerung (C) verbunden und konfiguriert ist, die Klappe (15) anzutreiben, um die Klappe (15) auf der Führungsschiene (16) in vertikaler Richtung zu bewegen.

2. Wärmepumpe (1) nach Anspruch 1, wobei das Gehäuse (10) ferner aufweist:

ein Einlassloch, die dem Außenventilator (6a) Außenluft zuführt; und
ein Auslassloch, das die durch den Außenventilator (6a) geleitete Luft auslässt,
wobei das Einlassloch und das Auslassloch in einem Abschnitt des Gehäuses (10) ausgebildet sind, der eine Grenze des Strömungsweg-Teilraums (S1) definiert.

3. Wärmepumpe (1) nach Anspruch 1 oder 2, wobei sich die Trennwand (13) in vertikaler Richtung lang erstreckt.

4. Wärmepumpe (1) nach einem der Ansprüche 1 bis 3, wobei der Strömungsweg-Teilraum (S1) und der Kreislauf-Teilraum (S2) auf einer linken und einer rechten Seite angeordnet sind und die Trennwand (13) dazwischen angeordnet ist.

**5.** Wärmepumpe (1) nach einem der Ansprüche 1 bis 4, wobei das Sperrloch (13a) benachbart zu einem unteren Ende der Trennwand (13) vorgesehen ist.

**6.** Wärmepumpe (1) nach einem der Ansprüche 1 bis 5, wobei das Loch (10a) in einem Abschnitt des Gehäuses (10) ausgebildet ist, der eine Grenze des Kreislauf-Teilraums (S1) definiert und über dem Sperrloch (13a) angeordnet ist.

**7.** Wärmepumpe (1) nach einem der Ansprüche 1 bis 6, wobei die Steuerung (C) konfiguriert ist, den Außenventilator (6a) für eine bestimmte Zeit vor dem Ansteuern des Verdichters (2) zu betreiben, wenn ein Wärmepumpen-Betriebssignal eingegeben wird.

**8.** Wärmepumpe (1) nach einem der Ansprüche 1 bis 7, wobei die Steuerung konfiguriert ist, das Sperrloch (13a) durch die Klappe (15) zu öffnen und den Außenventilator (6a) für eine bestimmte Zeit vor dem Ansteuern des Verdichters (2) zu betreiben, wenn das Wärmepumpen-Betriebssignal eingegeben wird.

**9.** Wärmepumpe (1) nach Anspruch 8, wobei die Steuerung konfiguriert ist, das Sperrloch (13a) durch die Klappe zu schließen, nachdem der Außenventilator (6a) eine bestimmte Zeit lang betrieben wurde.

**10.** Wärmepumpe (1) nach Anspruch 9, die ferner einen Sensor zum Erfassen des Kältemittels aufweist, das zum Kreislauf Teilraum (S2) ausgetreten ist.

**11.** Wärmepumpe (1) nach Anspruch 10, wobei die Steuerung (C) konfiguriert ist, das Sperrloch (13a) durch die Klappe (15) zu öffnen, während der Außenventilator (6a) betrieben wird, und den Antrieb des Verdichters (2) zu stoppen, wenn festgestellt wird, dass das zum Kreislauf Teilraum (S2) ausgetretene Kältemittel größer oder gleich einer Referenzmenge ist, basierend auf vom Sensor erhaltenen Informationen.

**12.** Wärmepumpe (1) nach einem der Ansprüche 8 bis 13, wobei die bestimmte Zeit erhöht wird, wenn die Gesamtmenge des in der Außeneinheit (1a) zirkulierenden Kältemittels zunimmt.

**13.** Wärmepumpe (1) nach einem der Ansprüche 1 bis 12, die ferner eine Wechselrichterplatine aufweist, die im Kreislauf Teilraum (S2) installiert ist und konfiguriert ist, eine Frequenz des Verdichters (2) zu steuern, wobei die Steuerung konfiguriert ist, den Außenventilator (6a) für eine bestimmte Zeit vor dem Ansteuern der Wechselrichterplatine zu betreiben, wenn ein Wärmepumpen-Betriebssignal eingegeben wird.

**Revendications**

**1.** Pompe à chaleur (1), comprenant :

une unité intérieure comprenant un échangeur de chaleur intérieur (8) ;
une unité extérieure (1a) comprenant un échangeur de chaleur extérieur (6) et un compresseur (2) prévu pour comprimer un réfrigérant ;
un carter (10) donnant sa forme extérieure à l'unité extérieure (1a) et procurant un espace intérieur où sont disposés l'échangeur de chaleur extérieur (6) et le compresseur (2) ;
une paroi de séparation (13) disposée dans l'espace intérieur du carter (10) et divisant l'espace intérieur en un espace partiel de voie de circulation (S1) où est disposé l'échangeur de chaleur extérieur (6) et un espace partiel de cycle (S2) où est disposé le compresseur (2) ;
un ventilateur extérieur (6a) disposé dans l'espace partiel de voie de circulation (S1) et prévu pour générer un flux d'air ; et
un contrôleur (C) prévu pour commander le fonctionnement du compresseur (2) et du ventilateur extérieur (6a),
où le carter (10) présente un trou (10a) communiquant avec l'espace partiel de cycle (S2), et la paroi de séparation (13) présente un orifice de barrière (13a) faisant communiquer l'espace partiel de voie de circulation (S1) avec l'espace partiel de cycle (S2),
**caractérisée en ce que** ladite pompe à chaleur (1) comprend en outre :

un volet (15) raccordé à un côté de la paroi de séparation (13) de manière à pouvoir être déplacé dans une direction verticale, où ledit volet (15) est positionné au-dessus de l'orifice de barrière (13a) pour ouvrir ledit orifice de barrière (13a), ou couvre un côté de l'orifice de barrière (13a) pour fermer ledit orifice de barrière (13a),
un rail de guidage (16) prévu pour guider le déplacement du volet (15), et
un moteur connecté électriquement au contrôleur (C) et prévu pour alimenter le volet (15) afin de déplacer ledit volet (15) dans la direction verticale sur le rail de guidage (16).

**2.** Pompe à chaleur (1) selon la revendication 1, où le carter (10) comprend en outre :

un orifice d'admission fournissant de l'air extérieur au ventilateur extérieur (6a) ; et

un orifice de refoulement évacuant l'air ayant traversé le ventilateur extérieur (6a),
où l'orifice d'admission et l'orifice de refoulement sont formés dans une partie du carter (10) qui définit une limite de l'espace partiel de voie de circulation (S1).

3. Pompe à chaleur (1) selon la revendication 1 ou la revendication 2, où la paroi de séparation (13) s'étend en longueur dans une direction verticale.

4. Pompe à chaleur (1) selon l'une des revendications 1 à 3, où l'espace partiel de voie de circulation (S1) et l'espace partiel de cycle (S2) sont disposés sur le côté gauche et le côté droit, la paroi de séparation (13) étant intercalée entre eux.

5. Pompe à chaleur (1) selon l'une des revendications 1 à 4, où l'orifice de barrière (13a) est adjacent à une extrémité inférieure de la paroi de séparation (13).

6. Pompe à chaleur (1) selon l'une des revendications 1 à 5, où le trou (10a) est formé dans une partie du carter (10) qui définit une limite de l'espace partiel de voie de circulation (S1) et est disposé au-dessus de l'orifice de barrière (13a).

7. Pompe à chaleur (1) selon l'une des revendications 1 à 6, où le contrôleur (C) est prévu pour activer le ventilateur extérieur (6a) pendant un temps déterminé, avant d'entraîner le compresseur (2) à l'entrée d'un signal d'activation de la pompe à chaleur.

8. Pompe à chaleur (1) selon l'une des revendications 1 à 7, où le contrôleur est prévu pour ouvrir l'orifice de barrière (13a) au moyen du volet (15) et pour activer le ventilateur extérieur (6a) pendant un temps déterminé, avant d'entraîner le compresseur (2) à l'entrée du signal d'activation de la pompe à chaleur.

9. Pompe à chaleur (1) selon la revendication 8, où le contrôleur est prévu pour fermer l'orifice de barrière (13a) au moyen du volet, à l'issue de l'activation du ventilateur extérieur (6a) pendant un temps déterminé.

10. Pompe à chaleur (1) selon la revendication 9, comprenant en outre un capteur pour détecter une fuite de réfrigérant dans l'espace partiel de cycle (S2).

11. Pompe à chaleur (1) selon la revendication 10, où le contrôleur (C) est prévu pour ouvrir l'orifice de barrière (13a) au moyen du volet (15) en activant le ventilateur extérieur (6a) et pour arrêter l'entraînement du compresseur (2), s'il est déterminé que la quantité de réfrigérant fuyant dans l'espace partiel de cycle (S2) est supérieure ou égale à une quantité de référence, sur la base des informations obtenues du capteur.

12. Pompe à chaleur (1) selon l'une des revendications 8 à 13, où le temps déterminé augmente en fonction de la quantité totale de réfrigérant circulant dans l'unité extérieure (1a).

13. Pompe à chaleur (1) selon l'une des revendications 1 à 12, comprenant en outre un circuit inverseur installé dans l'espace partiel de cycle (S2) et prévu pour (2) commander la fréquence du compresseur (2), où le contrôleur est prévu pour activer le ventilateur extérieur (6a) pendant un temps déterminé, avant de commander le circuit inverseur, à l'entrée d'un signal d'activation de la pompe à chaleur.

# FIG. 1

# FIG. 2

# FIG. 3

(a)

(b)

# FIG. 4

```
                    ┌─────────────┐
                    │    Start     │
                    └──────┬──────┘
                           │
                           ▼
            ┌──────────────────────────────┐
            │   Receive a heat pump         │──S10
            │   operation signal            │
            └──────────────┬───────────────┘
                           │
                           ▼
            ┌──────────────────────────────┐
            │   Operate the outdoor fan     │──S30
            │   for a certain time (t)      │
            └──────────────┬───────────────┘
                           │
                           ▼
            ┌──────────────────────────────┐
            │   Driving the inverter while  │
            │   maintaining the operation   │──S50
            │   of the outdoor fan          │
            └──────────────┬───────────────┘
                           │
                           ▼
                    ┌─────────────┐
                    │     End      │
                    └─────────────┘
```

# FIG. 5

```
        ┌──────────┐
        │  Start   │
        └────┬─────┘
             │
  ┌──────────────────────┐
  │ Receive a heat pump  │──── S10
  │   operation signal   │
  └──────────┬───────────┘
             │
  ┌──────────────────────┐
  │ Damper opens the     │──── S20
  │    barrier hole      │
  └──────────┬───────────┘
             │
  ┌──────────────────────┐
  │  Operate the outdoor │──── S30
  │ fan for a certain    │
  │     time (t)         │
  └──────────┬───────────┘
             │
  ┌──────────────────────┐
  │ Damper closes the    │──── S40
  │    barrier hole      │
  └──────────┬───────────┘
             │
  ┌──────────────────────┐
  │ Driving the inverter │──── S50
  │ while maintaining the│
  │ operation of the     │
  │   outdoor fan        │
  └──────────┬───────────┘
             │
         ◇ S60
   No  ╱ Detection        ╲
 ──────  amount of the leaked
        ╲ refrigerant ≥ a? ╱
             │ Yes
  ┌──────────────────────┐
  │ Damper opens the     │──── S70
  │    barrier hole      │
  └──────────┬───────────┘
             │
  ┌──────────────────────┐
  │ Stop driving the     │──── S80
  │ inverter while       │
  │ maintaining the      │
  │ operation of the     │
  │    outdoor fan       │
  └──────────┬───────────┘
             │
        ┌──────────┐
        │   End    │
        └──────────┘
```

# FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2896897 A1